# FASCICULE DE BREVET EUROPEEN

(11) **EP 2 826 680 B1**
(45) Date de publication et mention de la délivrance du brevet: **24.02.2016**
(21) Numéro de dépôt: 14176691.5
(22) Date de dépôt: 11.07.2014
(51) Int. Cl.: B60T 7/06, G05G 1/50

(54) **Dispositif de pédale de frein composite surmoulée**
Konfektionierte Pedalvorrichtung für Verbundbremse
Overmoulded composite brake pedal device

(30) Priorité: 17.07.2013 FR 1357007; 21.10.2013 FR 1360225
(43) Date de publication de la demande: 21.01.2015
(73) Titulaire: Carbody, 51420 Witry les Reims (FR)
(72) Inventeur: Lefebvre, Loïc, F-51450 BETHENY (FR)
(74) Mandataire: Rhein, Alain

(56) Documents cités:
- WO-A1-2013/125071
- DE-A1- 10 162 682

## Description

La présente invention entre dans le domaine des commandes de véhicule, en particulier dans l'actionnement au pied du freinage de véhicule.

L'invention concerne précisément un dispositif d'actionnement du freinage d'un véhicule constitué d'une pédale de frein.

Un tel dispositif trouvera une application particulière, mais aucunement limitative, dans l'actionnement du freinage d'un véhicule terrestre, notamment d'un véhicule automobile.

L'invention vise aussi le procédé de fabrication de ce dispositif de pédale.

De manière connue, la commande du freinage d'un véhicule peut s'effectuer au pied, par l'intermédiaire d'un dispositif sous forme de pédale. Cette dernière présente une forme allongée, dont l'extrémité libre reçoit en fixation un patin constituant une surface d'appui de la semelle du pied du conducteur, tandis que l'extrémité opposée est reliée, au travers d'une articulation en pivotement, à au moins un actionneur contrôlant les moyens de freinage dudit véhicule situés au niveau des moyens de roulement. Dès lors, l'appui sur le patin induit la rotation de la pédale autour de son articulation, et ainsi le déclenchement dudit actionneur.

A l'heure actuelle, les pédales sont constituées en matériau métallique, notamment en acier, sous la forme d'une tige, généralement une barre cylindrique.

Dans un souci de gain de masse sur tous les composants d'un véhicule, l'industrie automobile cherche à remplacer les éléments lourds, notamment en faisant intervenir des matériaux plus légers, comme des matériaux plastiques ou composites. De plus, la fabrication de pièces en matériau plastique présente un prix de revient moins élevé que pour des pièces métalliques.

Toutefois, ce remplacement doit impérativement s'effectuer en conservant les propriétés des éléments en question, soumis à de fortes contraintes mécaniques et thermiques, comme des fluctuations de températures allant de - 30 à + 80°C (degrés Celsius). En particulier, la difficulté majeure réside dans la conservation au fil du temps de la rigidité ou de la raideur de la pédale, au regard des tiges métalliques actuelles.

Pour ce faire, il a été imaginé de réaliser des dispositifs de pédales de frein constituées de deux demi-coquilles métalliques, dont l'intérieur creux diminue le poids de l'ensemble de ladite pédale. Une telle solution est décrite dans le document WO 2013/125071.

Sur cette base, le document DE 102 008 033 621 intègre une matrice constituée d'un matériau composite, servant de noyau rigide pour renforcer la structure de la pédale. Un tel noyau est destiné à être fixé sur le côté d'une structure en matériau plastique, cette dernière présentant une structure creuse entretoisée. Dès lors, le matériau composite dudit noyau, constitué de fibres longitudinales noyées dans un matériau plastique, assure la rigidité de la pédale ainsi obtenue, en particulier une résistance longitudinale accrue au pliage ou au ploiement. Toutefois, une telle solution est limitée du fait de la fixation séparée du noyau composite sur la structure plastique, en particulier lorsqu'elle est soumise à des contraintes mécaniques en torsion.

Une solution similaire est décrite au travers du document DE 101 62 682, concernant une pédale constituée de deux demi-coques assemblées, en matériau plastique. Ces demi-coques sont creuses et ouvertes au niveau de chaque face latérale, pourvues intérieurement d'un entretoisement croisé entre les autres faces, en particulier avant et arrière, afin d'améliorer la rigidité de la pédale ainsi réalisée. Encore une fois, cette solution limite la résistance de la pédale aux contraintes en torsion.

Ces inconvénients tentent d'être résolus au travers du document WO 2012/100881, décrivant un corps de pédale réalisé en un matériau plastique moulé par injection, présentant une structure alvéolaire pour diminuer encore son poids, lesdites alvéoles étant ouvertes supérieurement. Un tel corps vient coopérer par emboîtement au sein d'une coque en matériau composite, constituée de plastique renforcé par des fibres. En particulier, une telle coque présente une forme ouverte sur un de ses flancs, lui conférant une section globalement en C ou U retourné. Ainsi, le corps constitue un insert rigidifié extérieurement par ladite coque ouverte. Toutefois, si cette structure de coque améliore la raideur longitudinale et limite la torsion, du fait de la forme en U, l'ouverture latérale et celles des alvéoles remettent en cause la solidité d'une telle pièce, en particulier lors de sollicitations mécaniques élevées en température, provoquant des problèmes de cohésion entre le noyau et sa coque.

La présente invention a pour but de pallier les inconvénients de l'état de la technique, en proposant une pédale de frein possédant un corps en matériau composite ayant une forme fermée, de nature à garantir la tenue mécanique d'une telle pièce.

Pour ce faire, une telle pédale comprend tout d'abord un noyau en un matériau composite, dont la structure assure toute la robustesse et la rigidité du dispositif. Ce noyau est destiné à constitué un insert au sein d'un élément de couverture plastique, ledit élément conférant à ladite pédale uniquement sa fonction d'usage ergonomique, à savoir la réalisation du patin destiné à servir d'appui à la semelle du pied du conducteur, la réalisation de l'articulation en pivotement sous forme d'un axe de rotation, ainsi que la réalisation d'un logement destiné à recevoir l'actionneur.

En particulier, une caractéristique essentielle réside dans le noyau constitué de deux demi-coquilles, de formes complémentaires de manière à coopérer ensembles au niveau d'une de leur face respective. De plus, après leur réunion et leur fixation, la forme de ces coquilles confère audit noyau un corps partiellement intérieurement creux fermé, cet espace intérieur étant entièrement entouré.

Par ailleurs, ces coquilles peuvent être obtenues à partir de plaques en matériau composite par une opération de d'emboutissage à chaud ou thermocompression.

En outre, du fait de la coopération de matériaux identiques, la fixation des coquilles entre elles peut être assurée par différents procédés de liaison plastique, comme la soudure et le collage, mais aussi le rivetage, le bouterollage ou refoulement, l'agrafage, ou bien l'usage de colles thermofusibles (« hot-melt »).

Ensuite, lesdites coques assemblées sont recouvertes par un élément plastique au travers d'une opération de surmoulage thermoplastique.

Ainsi, ledit dispositif de pédale de frein selon l'invention comprend un corps constitué d'au moins deux demi-coquilles en matériau composite, lesdites coquilles ayant des formes complémentaires et présentant au niveau d'une de leur face une surface concave. Il se caractérise par le fait que lesdites demi-coquilles sont assemblées en fixation au niveau de leur dite face respective, de sorte que leur surface concave constitue un espace intérieur creux et fermé au sein dudit corps.

Selon un mode de réalisation préférentiel, ledit dispositif peut comprendre un revêtement thermoplastique recouvrant au moins en partie lesdites demi-coquilles assemblées.

En outre, ledit matériau composite est constitué d'une base de matrice thermoplastique.

De plus, l'invention concerne aussi un procédé de fabrication d'une pédale selon l'une quelconque des revendications précédentes, caractérisé en ce qu'il consiste à :
- emboutir à chaud des plaques en matériau composite sur une base de matrice thermoplastique et ainsi constituer deux demi-coquilles de formes complémentaires, chaque demi-coquille présentant au niveau d'une de ses faces une surface concave ;
- assembler lesdites demi-coquilles en fixation au niveau de leur dite face respective et constituer un corps creux fermé ;
- recouvrir ledit corps creux par surmoulage d'un revêtement thermoplastique.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue en perspective d'un mode préférentiel de réalisation du dispositif de pédale selon l'invention ;
- la figure 2 représente schématiquement une vue en perspective, similaire à la figure 1, selon un autre angle de vue, montrant en transparence le revêtement thermoplastique dudit corps composite ;
- la figure 3 représente schématiquement un détail de la figure 2, montrant l'extrémité libre de la pédale et le patin ;
- la figure 4 représente schématiquement un détail de la figure 2, montrant la partie centrale de la pédale et une configuration particulière pour recevoir l'actionneur des moyens de freinage ;
- la figure 5 représente schématiquement un détail de la figure 2, montrant l'extrémité opposée de la pédale avec une partie de l'articulation en pivotement ;

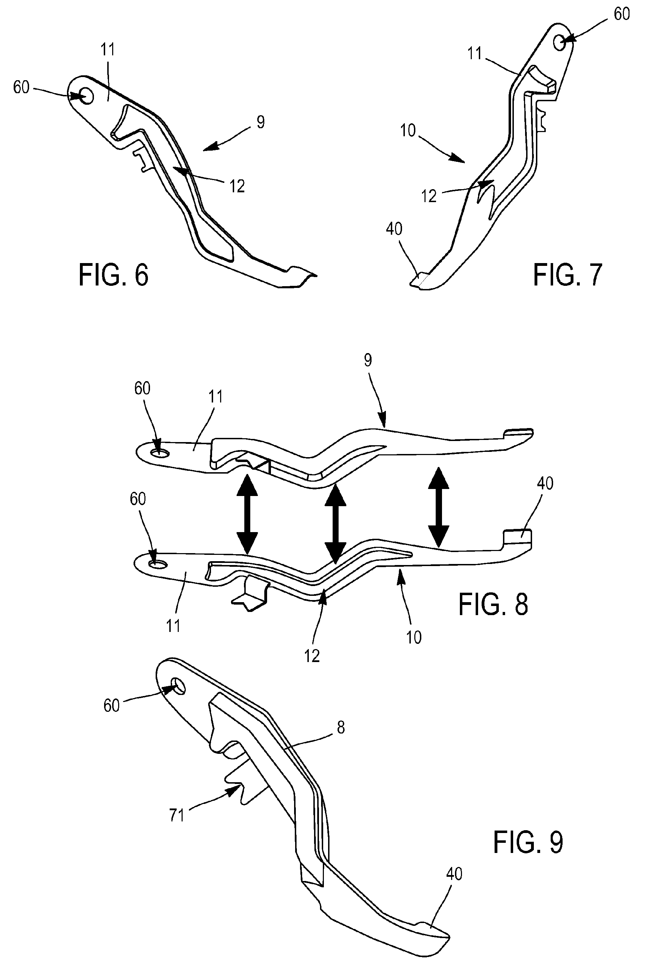

- la figure 6 représente schématiquement une vue en perspective d'une première demi-coque destinée à former le corps de la pédale, du côté gauche ;
- la figure 7 représente schématiquement une vue en perspective d'une seconde demi-coque destinée à former le corps de la pédale, du côté droit ;
- la figure 8 représente schématiquement une vue en perspective des deux demi-coques, disposées en vis-à-vis au moment de leur assemblage ;
- la figure 9 représente schématiquement une vue en perspective du corps creux fermé obtenu après assemblage desdites demi-coques ;
- la figure 10 représente schématiquement une vue en perspective d'un autre mode de réalisation d'une première demi-coque destinée à former le corps de la pédale, du côté gauche ;
- la figure 11 représente schématiquement une vue en perspective de la figure 10, selon un autre angle de vue, montrant ladite première demi-coque sur laquelle est montée la seconde demi-coque, du côté droit, représentée en transparence ;
- la figure 12 représente schématiquement une vue en perspective de la figure 11, selon encore un autre angle de vue, des deux demi-coques assemblées, sans transparence ; et
- la figure 13 représente schématiquement une vue en perspective de la figure 13, après habillage par le revêtement thermoplastique.

La présente invention concerne la réalisation d'un dispositif 1 de pédale, de préférence de pédale de frein d'un véhicule.

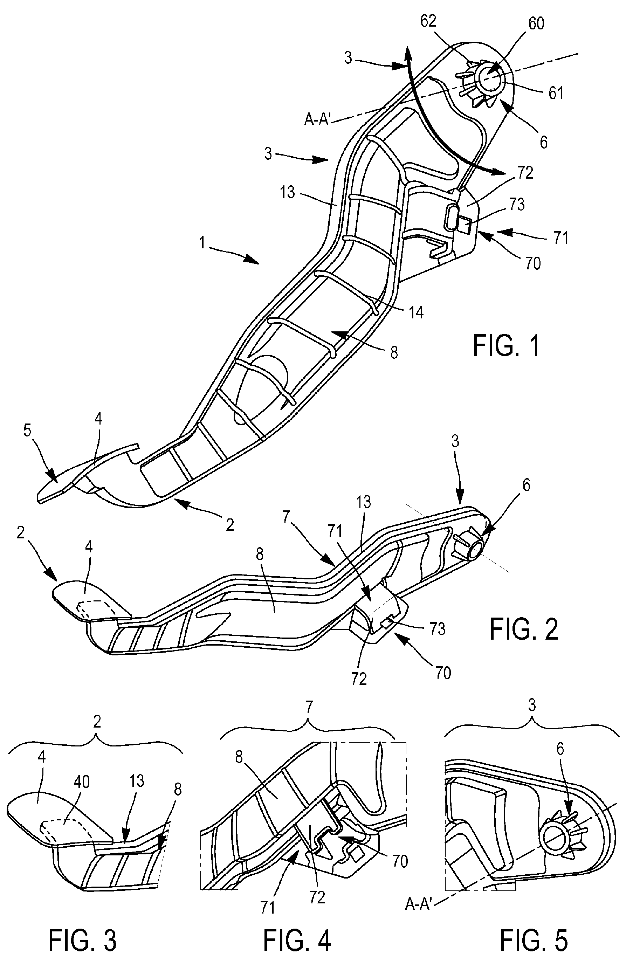

Selon le mode préférentiel de réalisation, visible sur la figure 1, une telle pédale 1 présente une forme allongée constituée de plusieurs portions de hauteurs et épaisseurs variables, lesdites portions étant inclinées les unes par rapport aux autres. L'axe médian longitudinal de cette pédale 1 serpente le long de ses portions la constituant, depuis une première extrémité 2 jusqu'à une seconde extrémité 3.

De plus, ladite première extrémité 2 est prévue pour être libre. Elle est conformée de manière à constituer un patin 4. Ce dernier se présente sous la forme d'une surface destinée à recevoir en appui la semelle du conducteur. Selon le mode de réalisation, ledit patin 4 présente une forme polygonale aux angles arrondis, avec une face supérieure bombée et convexe. Ce patin 4 peut aussi présenter des parties ajourées, notamment sous la forme d'orifices ou trous 5 le traversant.

L'extrémité opposée 3 est prévue pour être fixée de manière mobile au véhicule, en particulier en coopération avec des moyens de contrôle des moyens de freinage dudit véhicule (non représentés). Cette fixation mobile s'effectue au travers d'une articulation 6 en pivotement, autorisant la rotation de ladite pédale 1 autour d'un axe de rotation A-A', tel que modélisé sur la figure 1. Cette rotation s'effectue selon un intervalle angulaire déterminé, depuis une position de départ ou haute, dans laquelle ladite pédale 1 se trouve repoussée, notamment par des moyens de rappel adaptés (non représentés), jusqu'à une position active ou basse, et inversement, au travers de positions intermédiaires.

En position haute de repos, ladite pédale 1 n'opère aucune action sur les moyens de contrôle, tandis qu'en position basse active, l'action est maximale, le passage par les positions intermédiaires depuis la position au repos jusqu'à la position extrême active opérant des actions croissantes sur les moyens de freinage et, de ce fait, amplifiant le freinage appliqué au véhicule. Ainsi, le conducteur peut modifier le freinage de son véhicule en variant l'appui qu'il applique avec son pied sur la pédale.

De plus, ladite articulation 6 comprend un orifice 60 traversant d'une face à l'autre l'extrémité 3 de la pédale 1. Cet orifice 60 est destiné à recevoir, au moins en partie, un arbre solidaire desdits moyens de contrôle et autour duquel ladite pédale 1 va tourner en rotation.

Selon le mode de réalisation préférentiel, représenté sur les figures, ladite articulation 6 comprend aussi une couronne 61, de forme annulaire ou cylindrique creuse et traversée par ledit orifice 60. Cette couronne 61 est ménagée au moins d'un côté de ladite pédale 1, en saillie par rapport à une de ses faces latérales. En outre, ladite couronne 61 peut comprendre des renforts 62, sous forme de redents s'étendant en saillie à intervalles réguliers le long de toute la périphérie de la couronne 61. Ces renforts 62 peuvent présenter une forme inclinée, décroissante depuis la base de jonction de ladite couronne 61 avec la face de ladite pédale, jusqu'à son extrémité opposée libre.

En outre, lesdits redents 62 peuvent servir à coopérer en engrènement avec des moyens complémentaires que comportent lesdits moyens de contrôle, notamment pour appliquer le rappel vers la position haute de repos.

Par ailleurs, ladite pédale 1 comprend aussi une portion intermédiaire 7, située du côté et à proximité de l'extrémité 3 supportant ladite articulation 6. Cette portion 7 comprend un logement 70 situé en face inférieure et conformé de manière à recevoir en fixation un actionneur, faisant partie des moyens de contrôle. C'est cet actionneur qui, au moment du passage de la position haute au repos vers la position basse active, va mesurer la course de la rotation de ladite pédale 1 et transmettre ces informations auxdits moyens de contrôle.

En particulier, ledit logement 70 est pourvu de moyens de maintien 71 dudit actionneur. De tels moyens assurent la solidarisation de l'actionneur avec la pédale 1.

Selon le mode de réalisation spécifique représenté, lesdits moyens de maintien 71 peuvent se présenter sous la forme de pattes 72 s'étendant latéralement, de part et d'autre dudit logement 70. Ces pattes 72 peuvent aussi comprendre des orifices traversants 73, destinés à coopérer par insertion d'ergots que comprend l'actionneur, notamment par emboîtement ou clipsage.

Avantageusement, selon une caractéristique essentielle, la pédale 1 comprend un corps 8. Ce dernier constituera le noyau de la structure de ladite pédale 1, assurant en majeure partie les caractéristiques de raideur et de rigidité requises.

De plus, ledit corps 8 est constitué d'au moins deux demi-coquilles 9,10. En particulier, le corps 8 est constitué par une première demi-coquille gauche 9 et une seconde demi-coquille 10 droite.

De préférence, ces demi-coquilles 9,10 sont constituées d'un matériau composite, en particulier d'un matériau plastique intégrant intérieurement des fibres de renfort.

Selon le mode préférentiel de réalisation, lors de la fabrication, lesdites demi-coquilles 9,10 sont obtenues par emboutissage à chaque de plaques en un tel matériau composite, de manière à leur conférer leur forme.

A ce titre, ces demi-coquilles 9,10 ont des formes complémentaires, à savoir qu'elles présentent une forme essentiellement symétrique l'une par rapport à l'autre, de part et d'autre du plan médian longitudinal vertical dudit corps 8. Cette symétrie peut varier ponctuellement aux niveaux des différents éléments situés extérieurement précédemment décrites, comme le patin 4, l'articulation 6, le logement 7 et ses moyens de maintien 71.

A ce titre, la forme de chaque demi-coquille 9,10 reprend globalement la forme générale de ladite pédale 1 et de ses différents éléments, tels que précédemment décrits.

Toutefois, au niveau des faces intérieures, les demi-coquilles 9,10 présentent au moins sur le pourtour de chacune de leur face, une surface plane 11 destinée à servir de surface de jonction entre lesdites demi-coquilles 9,10. En somme, la face de la demi-coquille gauche 9 comprend une surface plane 11 qui va venir être accolée avec la surface plane 11 de la face située en vis-à-vis de l'autre demi-coquille 10.

Une fois positionnées l'une contre l'autre, lesdites demi-coquilles 9,10 seront assemblées en fixation.

Comme évoqué précédemment, la fixation des demi-coquilles 9,10 ensemble peut s'opérer par de nombreuses techniques de procédés de liaison plastique, notamment et de façon non limitative, par soudure ou collage, mais aussi rivetage, bouterollage ou refoulement, agrafage, ou bien usage de colles thermofusibles (« hot-melt »).

Ainsi solidarisées, les demi-coquilles 9,10 forment un unique noyau constituant le corps 8. Comme évoqué précédemment, ce corps 8 présente une forme qui reprend globalement la forme générale de ladite pédale 1, en particulier des différents éléments tels que précédemment décrits.

En outre, ledit corps 8 présente, au niveau de son extrémité constituant en partie la première extrémité 3 de la pédale 1, un support 40 dudit patin 4. Ce support 40 constitue l'âme et assure intérieurement la rigidité du patin 4.

Selon une autre caractéristique essentielle, les demi-coquilles 9,10 présentent au niveau d'une de leur face une surface concave 12. En particulier, ladite surface concave 12 est ménagée au niveau de la face intérieure de chaque demi-coquille 9,10, à savoir la face d'une demi-coquille 9 qui va venir être accolée et fixée à la face complémentaire de l'autre demi-coquille 10.

On notera que, selon le mode de fabrication à partir d'une plaque, la surface concave 12 constitue une surface convexe au niveau de la face opposée.

Ce sont ces surfaces concaves 12 des demi-coquilles 9,10 qui vont augmenter et améliorer la rigidité dudit corps 8 et, ainsi, de la structure de la pédale 1.

En effet, avantageusement, lesdites demi-coquilles 9,10 sont assemblées en fixation au niveau de leur dite face respective, de sorte que leur surface concave 12 constitue un espace intérieur creux et fermé au sein dudit corps 8. En d'autres termes, une fois assemblées, les demi-coquilles 9,10 ménages intérieurement un volume fermé, à savoir entièrement entouré par les parois intérieures des deux surface concaves 12. C'est cette structure creuse fermée qui limite les déformations du corps 8, que ce soit par torsion, flexion ou pliage, assurant ainsi les caractéristiques mécaniques de rigidité du noyau de la pédale 1.

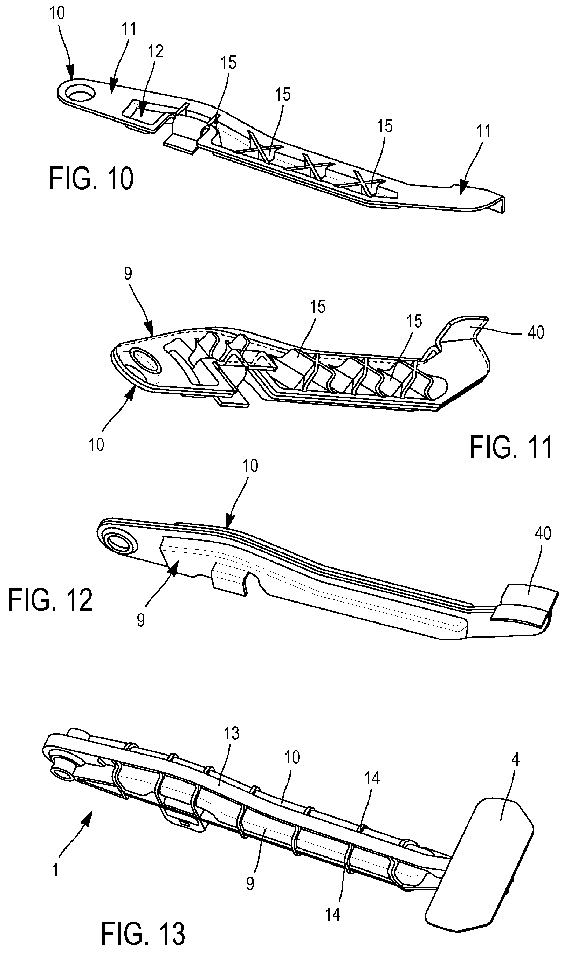

Selon un mode additionnel de réalisation, représenté sur les figures 10 à 13, ledit dispositif de pédale 1 prévoit de renforcer l'intérieur creux. Pour ce faire, il comprend, intérieurement audit espace intérieur creux d'au moins une demi-coquille 9,10, des nervures 15 d'entretoisement, de préférence dans chaque demi-coquille 9,10.

De telles nervures 15 sont surmoulées à l'intérieur d'une demi-coquille, de préférence de chaque demi-coquille 9,10, de manière à relier leurs parois, ainsi que leur fond, au niveau de l'intérieur du creux. Ces nervures 15 peuvent s'étendre transversalement, mais aussi de façon entrecroisée, comme visible sur la figure 10.

De plus, le chant supérieur de chaque nervure 13, situé au niveau de l'ouverture du creux de chaque demi-coquille 9,10, vient à affleurement avec la face de ladite demi-coquille 9 (ou 10) qui est destinée à venir être accolée avec la face de l'autre demi-coquille 10 (ou respectivement 9).

Dans le cas de nervures 15 ménagées au sein d'une seule demi-coquille 9 (ou 10), elles peuvent s'étendre de façon saillante, au-delà de la face ouverte, pour venir s'insérer au sein de l'autre demi-coquille 10 (ou réciproquement 9), coopérant en emboîtement avec le logement concave que cette dernière forme. Ainsi, il n'est plus nécessaire de mouler lesdites nervures 15 qu'au niveau d'une seule demi-coquille 9, facilitant la fabrication et diminuant les coûts.

Ainsi entretoisé de nervures 15, le creux intérieur de chaque demi-coquille 9,10 est rigidifié. Afin d'améliorer davantage la rigidité de la structure obtenue, l'invention prévoit de faire coïncider les nervures des deux demi-coquilles 9,10.

Pour ce faire, lesdites nervures 15 de chaque demi-coquille 9,10 s'étendent en vis-à-vis. En d'autres termes, une fois accolées l'une à l'autre, les nervures 15 se retrouvent parfaitement alignées, leur chant contigus étant aboutés l'un à l'autre. En somme, les nervures 15 s'étendent symétriquement au sein de chaque demi-coquille 9,10, de part et d'autre du plan médian d'accolement entre ces deux parties de la pédale 1.

En outre, lors de l'assemblage des demi-coquilles 9,10, lesdites nervures 15 peuvent être fixées entre elles par fusion et soudure améliorée.

D'autre part, ce corps 8 peut être recouvert, afin d'améliorer sa résistance, mais surtout assurer la finition de certains éléments, comme le patin 4 ou les moyens de maintien 71 du logement 7, ainsi que de lui conférer un meilleur aspect esthétique.

Pour ce faire, selon le mode de réalisation préférentiel, ledit corps creux 8 est recouvert par surmoulage d'un revêtement thermoplastique 13.

Dès lors, ce revêtement thermoplastique 13 recouvre au moins en partie lesdites demi-coquilles 9,10 assemblées. En particulier, ledit revêtement 13 recouvre en majeure partie les chants des demi-coquilles 9,10, ainsi qu'une partie des différents éléments, comme le patin 4, l'articulation 6 ou autre. Dans le cas précis du patin 4, le revêtement 13 vient recouvrir le support de patin 40 constitué par la forme de l'extrémité correspondante du corps 8, offrant une surface d'appui plus large et plus ergonomique.

Ce revêtement 13 peut aussi s'étendre, mais de façon ajourée, au niveau des faces latérales dudit corps 8, à savoir des faces extérieures opposées aux surfaces accolées des demi-coquilles 9,10.

Selon le mode préférentiel de réalisation représenté sur les figures 1 à 5, le revêtement 13 forme des stries 14 espacées reliant les parties dudit revêtement 13 situées supérieurement et inférieurement.

Comme évoqué précédemment, l'invention concerne aussi un procédé de fabrication d'une pédale 1 telle que précédemment décrite. Un tel procédé comprend au moins les étapes suivantes, consistant à :
- emboutir à chaud des plaques en matériau composite sur une base de matrice thermoplastique et ainsi constituer deux demi-coquilles 9,10 de formes complémentaires, chaque demi-coquille 9,10 présentant au niveau d'une de ses faces une surface concave 12 ;
- assembler lesdites demi-coquilles 9,10 en fixation au niveau de leur dite face respective et constituer un corps creux fermé 8 ;
- recouvrir ledit corps creux 8 par surmoulage d'un revêtement thermoplastique 13.

En particulier, c'est l'utilisation d'un matériau thermoplastique comme matrice du composte qui permet un formage rapide des deux demi-coquilles 9,10. Notamment dans le cas d'une forme simple, ce formage peut s'opérer directement dans la presse d'injection, avant surmoulage.

Ainsi, le dispositif de pédale 1 selon l'invention, constitué d'un corps 8 en matériau composite recouvert d'un revêtement 13 en matériau plastique, offre un gain de poids de 30 à 80 %, s'affranchissant d'une structure métallique ou d'une structure composite ou plastique alvéolaire.

De plus, sa forme spécifique constituée d'une âme creuse mais fermée, constituée par l'assemblage de deux demi-coquilles 9,10, confère les caractéristiques mécaniques requises, supportant de fortes fluctuations thermiques et résistant aux contraintes et sollicitations mécaniques sur ces intervalles de température.

L'invention pourra être adaptée en vue de la fabrication d'autres éléments d'un véhicule, comme les pédales d'accélérateur ou d'embrayage, mais aussi d'autres parties articulées.

Elle pourra aussi être transposée à d'autres types de véhicules que les véhicules terrestres, notamment des aéronefs, voir des véhicules fluviaux ou marins.

## Revendications

1. Dispositif (1) de pédale de frein, comprenant un corps (8) constitué d'au moins deux demi-coquilles (9,10) en matériau composite, lesdites demi-coquilles (9,10) ayant des formes complémentaires et présentant au niveau d'une de leur face une surface concave (12), **caractérisé par le fait que** lesdites demi-coquilles (9,10) sont assemblées en fixation au niveau de leur dite face respective, de sorte que leur surface concave (12) constitue un espace intérieur creux et fermé au sein dudit corps (8).

2. Dispositif (1) selon la revendication 1, **caractérisé par le fait qu'**il comprend, intérieurement audit espace intérieur creux d'au moins une demi-coquille (9,10), des nervures d'entretoisement (15).

3. Dispositif (1) selon la revendication 1, **caractérisé par le fait qu'**il comprend, intérieurement audit espace intérieur creux chaque demi-coquille (9,10), des nervures d'entretoisement (15) et **par le fait que** lesdites nervures (15) de chaque demi-coquille (9,10) s'étendent en vis-à-vis.

4. Dispositif (1) selon l'une quelconque des revendications précédentes, **caractérisé en ce qu'**il comprend un revêtement thermoplastique (13) recouvrant au moins en partie lesdites demi-coquilles (9,10) assemblées.

5. Dispositif (1) selon l'une quelconque des revendications précédentes, **caractérisé par le fait que** ledit matériau composite est constitué d'une base de matrice thermoplastique.

6. Procédé de fabrication d'un dispositif de pédale (1) selon l'une quelconque des revendications précédentes, **caractérisé en ce qu'**il consiste à :
- emboutir à chaud des plaques en matériau composite sur une base de matrice thermoplastique et ainsi constituer deux demi-coquilles (9,10) de formes complémentaires, chaque demi-coquille (9,10) présentant au niveau d'une de ses faces une surface concave (12) ;
- assembler lesdites demi-coquilles (9,10) en fixation au niveau de leur dite face respective et constituer un corps creux fermé (8) ;
- recouvrir ledit corps creux (8) par surmoulage d'un revêtement thermoplastique (13).

## Patentansprüche

1. Bremspedalvorrichtung (1), umfassend einen Körper (8), der aus mindestens zwei Halbschalen (9, 10) aus einem Verbundmaterial besteht, wobei die besagten Halbschalen (9, 10) ergänzende Formen haben und im Bereich einer ihrer Flächen eine konkave Oberfläche (12) aufweisen, **dadurch gekennzeichnet, dass** die besagten Halbschalen (9, 10) im Bereich ihrer besagten jeweiligen Fläche so in Befestigung zusammengefügt sind, dass ihre konkave Oberfläche (12) einen hohlen und geschlossenen Innenraum innerhalb des besagten Körpers (8) bildet.

2. Vorrichtung (1) nach Anspruch 1, **dadurch gekennzeichnet, dass** sie innerhalb des besagten hohlen Innenraums von zumindest einer Halbschale (9, 10) Abstandsrippen (15) umfasst.

3. Vorrichtung (1) nach Anspruch 1, **dadurch gekennzeichnet, dass** sie innerhalb des besagten hohlen Innenraums jeder Halbschale (9, 10) Abstandsrippen (15) umfasst und dass die besagten Rippen (15) jeder Halbschale (9, 10) sich gegenüber einander erstrecken.

4. Vorrichtung (1) nach irgendeinem der vorgehenden Ansprüche, **dadurch gekennzeichnet, dass** sie eine thermoplastische Beschichtung (13) umfasst, die zumindest teilweise die besagten zusammengefügten Halbschalen (9, 10) bedeckt.

5. Vorrichtung (1) nach irgendeinem der vorgehenden Ansprüche, **dadurch gekennzeichnet, dass** das besagte Verbundmaterial aus einer thermoplastischen Matrix-Basis besteht.

6. Verfahren zur Herstellung einer Pedalvorrichtung (1) nach irgendeinem der vorgehenden Ansprüche, **dadurch gekennzeichnet, dass** es darin besteht:
- Platten aus Verbundmaterial auf einer thermoplastischen Matrix-Basis heißzupressen und also zwei Halbschalen (9, 10) ergänzender Formen zu bilden, wobei jede Halbschale (9, 10) im Bereich einer ihrer Flächen eine konkave Oberfläche (12) aufweist;
- die besagten Halbschalen (9, 10) in Befestigung im Bereich ihrer besagten jeweiligen Fläche zusammenzufügen und einen geschlossenen Hohlkörper (8) zu bilden;
- den Hohlkörper (8) durch Konfektionieren einer thermoplastischen Beschichtung (13) zu bedecken.

## Claims

1. A brake pedal device (1), comprising a body (8) formed of at least two half-shells (9, 10) made of composite material, said half-shells (9, 10) having complementary shapes and having, at the level of one of their faces, a concave surface (12), wherein said half-shells (9, 10) are assembled by fastening at the level of their respective said face, so that their concave surface (12) forms a hollow and closed inner space within said body (8).

2. The device (1) according to claim 1, wherein it comprises, inside said hollow inner space of at least one half-shell (9, 10), spacer ribs (15).

3. The device (1) according to claim 1, wherein it comprises, inside said hollow inner space of each half-shell (9, 10), spacer ribs (15), and said ribs (15) of each half-shell (9, 10) extend in front of each other.

4. The device (1) according to any one of the preceding claims, wherein it comprises a thermoplastic coating (13) covering at least partially said assembled half-shells (9, 10).

5. The device (1) according to any one of the preceding claims, wherein said composite material is formed of a thermoplastic matrix base.

6. A method for manufacturing a pedal device (1) according to any one of the preceding claims, wherein it consists in:
- hot pressing plates of composite material on a thermoplastic matrix base and thus forming two half-shells (9, 10) having complementarily shapes, each half-shell (9, 10) having, at the level of one of its faces, a concave surface (12);
- assembling said half-shells (9, 10) by fastening them at the level of their respective said face and forming a closed hollow body (8);
- covering said hollow body (8) by overmoulding a thermoplastic coating (13).
